# EUROPÄISCHE PATENTSCHRIFT

(11) **EP 0 780 048 B1**
(45) Veröffentlichungstag und Bekanntmachung des Hinweises auf die Patenterteilung: **28.11.2001**
(21) Anmeldenummer: 96115524.9
(22) Anmeldetag: 27.09.1996
(51) Int. Cl.: A01B 63/00, B60G 17/056

(54) **Steuerungsvorrichtung**
Control device
Dispositif de commande

(30) Priorität: 22.12.1995 DE 29520328 U
(43) Veröffentlichungstag der Anmeldung: 25.06.1997
(73) Patentinhaber: HYDAC Technology GmbH, D-66280 Sulzbach (DE)
(72) Erfinder: Schmidt, Hubertus, Dipl.-Ing., 66280 Sulzbach (DE); Huth,Heinz Peter, Dipl.-Ing., 66802 Überherrn (DE)
(74) Vertreter: Patentanwälte Bartels und Partner

(56) Entgegenhaltungen:
- EP-A- 0 481 120
- EP-A- 0 483 393
- EP-A- 0 638 690
- EP-A- 0 670 230
- WO-A-93/11363
- DE-A- 2 534 475
- US-A- 5 147 172

## Beschreibung

Die Erfindung betrifft eine Steuerungsvorrichtung zum Beherrschen großer Fluidvolumenströme mit den Merkmalen des Oberbegriffs des Patentanspruches 1.

Damit die jeweilige Arbeitsgerätschaft ihre Arbeitsfunktion ausüben kann, sind gegebenenfalls sehr hohe Fluidvolumenströme notwendig. Beispielhaft sei hier das Heben und Senken eines Ackerpfluges bei einem Traktor genannt, der in seiner abgesenkten Stellung die Bodenbearbeitung vornimmt und angehoben das Wenden des Traktors sowie die An- und Abfahrt ermöglicht, falls die hierfür im Einsatzfall verwendete elektronische Steuereinrichtung ausgefallen ist. Die dahingehenden Arbeitsfunktionen wurden bisher von einer Bedienperson über Kugelventile geschaltet, wobei jedoch im Hinblick auf die großen Fluidvolumenströme große Nennweiten erforderlich sind und am Kugelventil auch große Schaltkräfte auftreten. Eine weitere Möglichkeit besteht darin, für die jeweils auszuübende Arbeitsfunktion eine eigenständige Druckmittelversorgung mit Förderpumpe vorzusehen; dies führt jedoch zu einer insgesamt großen, kompliziert aufbauenden Gesamtsteuerungsvorrichtung bei den Fahrzeugen.

Durch die EP 670 230 A2 ist eine gattungsgemäße Steuerungsvorrichtung zum Beherrschen großer Fluidvolumenströme bekannt mit einer Druckmittelversorgung für eine hydropneumatische niveaugeregelte Achsfederung eines Arbeitsfahrzeuges, wie einem Traktor od. dgl., mit einer von einer Förderpumpe gespeisten Hydraulikanlage, an die ein hydraulischer Verbraucher in Form einer Arbeitsgerätschaft angeschlossen ist. Des weiteren weist die bekannte Steuerungsvorrichtung Druckspeicher sowie die zugehörigen Zylinderräume oberhalb und unterhalb des Kolbens der für die Niveauregelung des Fahrzeugaufbaues erforderlichen Stellzylinder der hydropneumatischen Achsfederung auf, von denen der obere Zylinderraum bei Unterschreiten eines für die Einstellung des gewünschten Niveaus benötigten Druckes von der Förderpumpe der Hydraulikanlage mit Druckmittel aufgefüllt wird und wobei die Förderpumpe lediglich bei angezeigtem Bedarf an Druckmittel auf Lieferung gesteuert wird. Um bei solchen Hydraulikanlagen, bei denen die Druckmittelversorgung wahlweise mittels einer Konstantpumpe oder einer Load-Sensing-Pumpe erfolgt, einfach aufgebaute herkömmliche Serienventile als Niveauregelventile einsetzen zu können, wird bei Druckmittelbedarf die zu einer Druckmittellieferung durch die Pumpe führende Situation simuliert, wie sie bei der Betätigung eines der Verbraucher gegeben ist. Bei der bekannten Lösung wird darüber hinaus zum Ansteuern der jeweiligen hydraulischen Arbeitsgerätschaft ein Wechselventil eingesetzt, das insbesondere bei hohen Fluidmengen und hohen Fluiddrücken sich nicht immer sicher und funktionsgerecht schalten läßt. Auch ist die bekannte Lösung nur mit einem erhöhten baulichen Aufwand zu realisieren.

Ausgehend von diesem Stand der Technik liegt der Erfindung die Aufgabe zugrunde, eine Steuerungsvorrichtung zum Beherrschen großer Fluidvolumenströme zum Ansteuern von Arbeitsgerätschaften bei Fahrzeugen dahingehend zu verbessern, daß diese sich mit geringen Betätigungskräften fernbedienen lassen, wobei wenig Bauteile benötigt werden, so daß die Steuerungsvorrichtung sich kostengünstig verwirklichen läßt. Eine dahingehende Aufgabe löst eine Steuerungsvorrichtung mit den Merkmalen des Anspruches 1 in seiner Gesamtheit.
Dadurch, daß gemäß dem kennzeichnenden Teil des Patentanspruches 1 der eingehende eine Nutzanschluß des einen Wegeventils an den Nebenzweig und der an dieses Ventil eingehende andere Nutzanschluß an die Tankleitung angeschlossen ist, daß die eingehenden beiden Nutzanschlüsse des anderen Wegeventils in die Pumpen- bzw. Tankleitung münden und daß der ausgehende Nutzanschluß dieses Ventils an das jeweils hydraulisch betätigbare Antriebselement der Arbeitsgerätschaft angeschlossen ist, erfolgt eine Druckversorgung unter Einbeziehen des Hydrospeichers der hydropneumatischen Federung, die bei höherwertigen Fahrzeugen und mithin auch bei Traktoren in der Regel vorhanden ist. Die Druckmittelversorgung wird dabei von dem Konstantdruckkreis der hydropneumatischen Federung abgegriffen und damit eine Schalteinrichtung betätigt, die wiederum die für die Betätigung der Arbeitsgerätschaft notwendigen hohen Fluidvolumenströme entsprechend regelt. Trotz der sehr hohen Fluidmengen und gegebenenfalls hohen Fluiddrücken im jeweiligen Nutzanschluß der Wegeventile lassen sich diese mithin sicher schalten und somit eine Arbeitsfunktion für die hydraulisch ansteuerbare Arbeitsgerätschaft auslösen. Mit geringem baulichen Aufwand läßt sich somit eine sichere Druckversorgung und das Auslösen hoher Schaltkräfte für eine hydraulische Arbeitsgerätschaft bei Fahrzeugen herstellen, sofern diese eine Grundschaltung für eine hydropneumatische Federung mit Hydrospeicher aufweisen. Die dahingehende Steuerungsvorrichtung eignet sich dann in hohem Maße auch, um mit geringen Betätigungskräften fernbedient zu werden. Ferner kann von einer aufwendigen und teuren hydraulischen Vorsteuerung mit separater Druckmittelversorgung über eine eigenständige Fluid- oder Förderpumpe Abstand genommen werden.

Bei einer bevorzugten Ausführungsform der erfindungsgemäßen Steuerungsvorrichtung weist die Schalteinrichtung zwei Wegeventile auf, wobei der fluidführende Ausgang des einen Wegeventils an das Betätigungselement des anderen Wegeventils angeschlossen ist. Somit läßt sich der hohe Druck im Nebenzweig über ein erstes Wegeventil zum Schalten eines zweiten Wegeventils verwenden, das wiederum die Durchsatzmengen der zu beherrschenden großen Fluidvolumenströme abhängig von der jeweils benötigten Arbeitsfunktion ansteuert. Aufgrund des hohen Druckes im Nebenzweig stehen sehr große Schaltkräfte an dem zweiten Wegeventil zur Verfügung, welche notwendig sind, um bei den großen Fluidvolumenströmen noch einen sicheren Schaltvorgang mit dem zweiten Wegeventil auslösen zu können.

Vorzugsweise ist dabei für eine elektrische Fernbedienung das jeweilige Wegeventil elektrisch ansteuerbar und weist zwei Schaltstellungen und drei Nutzanschlüsse auf.

Weitere vorteilhafte Ausgestaltungen der Steuerungsvorrichtung sind Gegenstand der Unteransprüche.

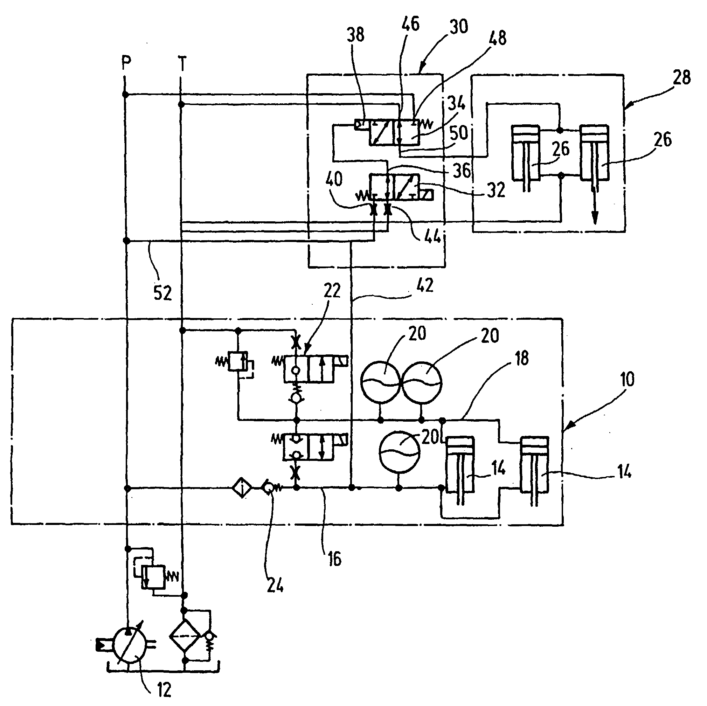

Im folgenden wird die Steuerungsvorrichtung anhand der einzigen Figur der Anmeldung näher erläutert, die den Schaltplan der Steuerungsvorrichtung zeigt.

Das Schaltbild zeigt eine als Ganzes mit 10 bezeichnete hydropneumatische Federung 10, die bauüblich ist und die in vergleichbarer Anordnung beispielsweise in der DE 43 08 460 A1 offenbart und näher erläutert ist. Für eine Druckmittelversorgung ist die hydropneumatische Federung 10 an eine Pumpenleitung P sowie an eine Tankleitung T angeschlossen, wobei in die Pumpenleitung P über eine Förder- oder Fluidpumpe 12 Fluid vorgebbaren Druckes eingespeist wird. Die hydropneumatische Federung 10 weist als jeweiliges Antriebselement mindestens einen hydraulisch betätigbaren Arbeitszylinder 14 auf, der mit Gehäuseteilen des Fahrzeugs, beispielsweise in Form eines Traktors, zusammenwirkt. Die beiden Arbeitszylinder 14 nach der Figur sind stangenseitig fluidführend an eine Steuerleitung 16 und kolbenseitig an eine Anschlußleitung 18 angeschlossen, wobei die Steuerleitung 16 in die Pumpenleitung P und die Anschlußleitung 18 in die Tankleitung T mündet.

An die Steuerleitung 16 ist ein und an die Anschlußleitung 18 sind im vorliegenden Fall zwei Hydrospeicher 20 angeschlossen. In Abhängigkeit vom Anwendungfall kann jedoch auch ein Hydrospeicher genügen oder mehr als zwei. Dahingehende Hydrospeicher bestehen im wesentlichen aus einem Flüssigkeitsund einem Gasteil mit einem gasdichten Trennelement, wobei der Flüssigkeitsteil mit dem hydraulischen Kreislauf der Hydraulikanlage in Verbindung steht. Beim Ansteigen des Druckes wird das Gas komprimiert und Flüssigkeit im Hydrospeicher 20 aufgenommen, wobei beim Senken des Druckes das verdichtete Gas expandiert und die dabei gespeicherte Druckflüssigkeit wiederum in den Hydraulikkreislauf verdrängt wird. Mögliche Bauarten von Hydrospeichern mit Trennelement sind Blasenspeicher, Membranspeicher und Kolbenspeicher.

Zum Ansteuern der hydropneumatischen Federung 10 weist diese einen als Ganzes mit 22 bezeichneten Ventilsteuerblock auf, der in seiner Funktion bekannt ist, so daß an dieser Stelle hierauf nicht mehr näher eingegangen wird. Die hydropneumatische Federung 10 bildet eine Art Konstantdruckkreis aus und ist durch ein Rückschlagventil 24 vom die Förderpumpe 12 aufweisenden Hauptkreis getrennt. Zur Realisierung der Arbeitsfunktion, beispielsweise in Form des Hebens und Senkens eines Ackerpfluges (nicht dargestellt) für Traktoren (nicht dargestellt), dienen zwei Arbeitszylinder 26 der Arbeitsgerätschaft 28, die stangenseitig fluidführend an die Tankleitung T und kolbenseitig an eine als Ganzes mit 30 bezeichnete Schalteinrichtung angeschlossen sind. Die Schalteinrichtung 30 weist zwei Wegeventile 32,34 auf, wobei der fluidführende Ausgang 36 des einen Wegeventils 32 an das Betätigungselement 38 des anderen Wegeventils 34 angeschlossen ist. Das jeweilige Wegeventil 32,34 ist elektrisch ansteuerbar und mithin fernbedienbar und weist jeweils zwei Schaltstellungen und drei Nutzanschlüsse auf.

Der eingehende eine Nutzanschluß 40 des einen Wegeventils 32 ist an einen Nebenzweig 42 der Schaltvorrichtung 30 und der an dieses Ventil 32 eingehende andere Nutzanschluß 44 ist an die zum Tank führende Tankleitung T angeschlossen. Die beiden angesprochenen Nutzanschlüsse 40 und 44 können jeweils mit einer Drossel, vorzugsweise jedoch mit einer Düse versehen sein, über die das Schaltverhalten einstellbar ist. Der Nebenzweig 42 mündet mit seinem, dem Nutzanschluß 40 gegenüberliegenden Ende fluidführend in die Steuerleitung 16. Die eingehenden beiden Nutzanschlüsse 48,46 des anderen Wegeventils 34 münden in die Pumpenleitung P bzw. in die Tankleitung T. Der ausgehende Nutzanschluß 50 dieses Ventils 34 ist wiederum fluidführend mit der Kolbenseite der beiden Arbeitszylinder 26 verbunden.

Der Nebenzweig 42 besteht aus einer druckführenden Verbindungsleitung, die mit ihrem einen, dem einen Wegeventil 32 abgekehrten Ende in die Steuerleitung 16 der hydropneumatischen Federung 10 mündet. Ferner ist der zugeordnete Hydrospeicher 20 an die Steuerleitung 16 zwischen der Einmündungsstelle der druckführenden Verbindungsleitung, also des Nebenzweiges 42, und der Stangenseite der Arbeitszylinder 14 der Federung 10 angeschlossen. Auf den Nebenzweig 42 wirkt also sowohl der durch die Förderpumpe 12 verursachte Fluiddruck als auch der gespeicherte Druck des Hydrospeichers 20 über die Steuerleitung 16 ein, so daß bei geschaltetem Wegeventil 32, das dann seine in Blickrichtung auf den Schaltplan rechts dargestellte Schaltstellung einnimmt, Fluid hohen Druckes über den Nutzanschluß 36 an dem Betätigungselement 38 des weiteren Wegeventils 34 ansteht. Trotz der sehr hohen Fluidmengen und gegebenenfalls hohen Fluiddrücken im Nutzanschluß 48 des Wegeventils 34 läßt sich dieses mithin sicher schalten und somit eine Arbeitsfunktion für die Arbeitszylinder 26 auslösen. Mit geringem baulichen Aufwand läßt sich somit eine sichere Druckversorgung und das Auslösen hoher Schaltkräfte für eine hydraulische Arbeitsgerätschaft 28 bei Fahrzeugen herstellen, sofern diese eine Grundschaltung für eine hydropneumatische Federung mit Hydrospeichern aufweisen.

Wie die Figur desweiteren zeigt, ist ein weiterer Nebenzweig 52 sowohl an die Pumpenleitung P als auch über den Eingang 40 an das Wegeventil 32 angeschlossen und bildet einen Abzweig zu dem bereits angesprochenen Nebenzweig 42. Der Druck für die Schalteinrichtung 30 läßt sich derart aus dem Standby-Druck bzw. dem Förderdruck der Förderpumpe 12 gewinnen, wobei vorzugsweise das Wegeventil 32 als leckfreies Sitzventil ausgeführt ist.

Anstelle der beiden Arbeitszylinder 26 kann die Arbeitsgerätschaft auch einen Hydraulikmotor (nicht dargestellt) aufweisen, der für einen möglichen Antrieb in beiden Richtungen mit einer Seite an den Nutzanschluß 50 angeschlossen ist und mit seiner anderen Seite an den Tankanschluß T. Neben den gezeigten Arbeitsgerätschaften können auch andere hydraulisch betätigbare Bauteile mittels der Schaltvorrichtung angesteuert werden.

## Patentansprüche

1. Steuerungsvorrichtung zum Beherrschen großer Fluidvolumenströme zum Ansteuern von mindestens einem hydraulisch betätigbaren Antriebselement einer Arbeitsgerätschaft (28) bei Fahrzeugen, wie Traktoren, die eine hydropneumatische Federung (10) mit Hydrospeichern (20) aufweisen, die an einen Hauptkreis mit einer Förderpumpe (12) und eine zum Tank führende Tankleitung (T) angeschlossen sind, wobei in einem Nebenzweig (42) von der Förderpumpe (12) in eine Pumpenleitung (P) gefördertes Fluid unter der Wirkung mindestens eines Hydrospeichers (20) der hydropneumatischen Federung (10) mit hohem Druck an eine Schalteinrichtung (30) weitergeleitet ist, die auf die Fluidvolumenströme zur Ansteuerung der jeweiligen Arbeitsgerätschaft (28) einwirkt und wobei die Schalteinrichtung (30) zwei Wegeventile (32,34) mit mehreren Nutzanschlüssen aufweist, **dadurch gekennzeichnet, daß** der eingehende eine Nutzanschluß (40) des einen Wegeventils (32) an den Nebenzweig (42) und der an dieses Ventil (32) eingehende andere Nutzanschluß (44) an die Tankleitung (T) angeschlossen ist, daß die eingehenden beiden Nutzanschlüsse (48,46) des anderen Wegeventils (34) in die Pumpen(P)- bzw. Tankleitung (T) münden und daß der ausgehende Nutzanschluß (50) dieses Ventils (34) an das jeweils hydraulisch betätigbare Antriebselement der Arbeitsgerätschaft (28) angeschlossen ist.

2. Steuerungsvorrichtung nach Anspruch 1, **dadurch gekennzeichnet, daß** der fluidführende Ausgang (36) des einen Wegeventils (32) an das Betätigungselement (38) des anderen Wegeventils (34) angeschlossen ist.

3. Steuerungsvorrichtung nach Anspruch 2, **dadurch gekennzeichnet, daß** das jeweilige Wegeventil (32,34) zwei Schaltstellungen und drei Nutzanschlüsse aufweist.

4. Steuerungsvorrichtung nach einem der Ansprüche 1 bis 3, **dadurch gekennzeichnet, daß** in den Nutzanschlüssen (40 und 44) Düsen geschaltet sind, mittels deren das Schaltverhalten einstellbar ist.

5. Steuerungsvorrichtung nach einem der Ansprüche 1 bis 4, **dadurch gekennzeichnet, daß** das jeweilige Antriebselement ein hydraulisch betätigbarer Arbeitszylinder (26) ist, der kolbenseitig an den ausgehenden Nutzanschluß (50) des anderen Wegeventils (34) und stangenseitig an den Tankanschluß (T) angeschlossen ist.

6. Steuerungsvorrichtung nach einem der Ansprüche 1 bis 5, **dadurch gekennzeichnet, daß** das jeweilige Antriebselement mindestens ein Hydraulikmotor ist, der an den Nutzanschluß (50) und die Tankleitung (T) anschließbar ist.

7. Steuerungsvorrichtung nach einem der Ansprüche 1 bis 6, **dadurch gekennzeichnet, daß** der Nebenzweig (42) eine druckführende Verbindungsleitung aufweist, die mit ihrem einen, dem einen Wegeventil (32) abgekehrten Ende in eine Steuerleitung (16) der hydropneumatischen Federung (10) mündet, die an die Pumpenleitung (P) sowie an die Stängenseite von hydraulischen Arbeitszylindem (14) der Federung angeschlossen ist.

8. Steuerungsvorrichtung nach Anspruch 7, **dadurch gekennzeichnet, daß** mindestens ein Hydrospeicher (20) an die Steuerleitung (16) zwischen der Einmündung der druckführenden Verbindungsleitung und der Stangenseite der Arbeitszylinder (14) der Federung (10) angeschlossen ist.

## Claims

1. A control device for controlling the flow of large volumes of fluids, for activating at least one hydraulically operated drive component of an operating unit of equipment (28) in vehicles such as tractors which have a hydro-pneumatic suspension unit (10) with hydraulic accumulators (20) connected to a main circuit with a delivery pump (12) and a pipe line (T) leading to the tank, fluid in a side branch (42) delivered by a pump (12) to a pump line (P) where it is carried further at high pressure under the effect of at least one hydraulic accumulator (20) of the hydro-pneumatic suspension unit (10) to a switching device (30) which acts on the flow of fluids to actuate each respective operating unit of equipment (28), the switching device having two way-valves (32, 34) with several service connections, **characterised in that** the one incoming service connection (40) of the one way-valve (32) is connected to the side branch (42) and the other incoming service connection (44) to this valve (32) being connected to the tank line (T), that the two incoming service connections (48, 46) of the other way-valve (34) terminate in the pump (P) or tank (T) line and that the outgoing service connection (50) of this valve (34) is connected to each hydraulically operated drive element of the operating unit of equipment (28).

2. A control device according to Claim 1, **characterised in that** the hydraulic outlet (36) of the one way-valve (32) is connected to the operating element (38) of the other way-valve (34).

3. A control device according to Claim 2, **characterised in that** each respective way-valve (32, 34) has two positions and three service connections.

4. A control device according to one of the Claims 1 to 3, **characterised in that** nozzles are switched in the service connections (40 and 44) by means of which the switching response can be set.

5. A control device according to one of the Claims 1 to 4, **characterised in that** each respective drive element is a hydraulically operable working cylinder (26) which at the piston end is connected to the outgoing service connection (50) of the other way-valve (34) and at the piston rod end to the tank connection (T).

6. A control device according to one of the Claims 1 to 5, **characterised in that** each respective drive element is at least one hydraulic motor connectable to the service connection (50) and the tank line (T).

7. A control device according to one of the Claims 1 to 6, **characterised in that** the side branch (42) has a pressure line terminating with its one end away from the way-valve (32) in a control line (16) of the hydro-pneumatic suspension unit (10) which is connected to the pump line (P) and the piston rod end of the hydraulic working cylinders (14) of the suspension.

8. A control device according to Claim 7, **characterised in that** at least one hydraulic accumulator (20) is connected to the control line (16) between the termination of the connecting pressure line and the piston rod end of the working cylinder (14) of the suspension unit (10).

## Revendications

1. Appareil de commande destiné à contrôler de grands débits volumiques de fluide afin d'exciter au moins un élément d'entraînement hydraulique susceptible d'être actionné appartenant à un instrument de travail (28) pour des véhicules, tels que des tracteurs, qui présentent une suspension hydropneumatique (10) dotée d'accumulateurs hydrauliques (20), qui sont reliés au niveau d'un grand cercle à une pompe d'alimentation (12) et à une canalisation de réservoir (T) conduisant au réservoir, moyennant quoi, un fluide acheminé dans une tuyauterie de pompage (P) est transmis dans une antenne (42) de la pompe d'alimentation (12) sous l'effet d'au moins un accumulateur hydraulique (20) de la suspension hydropneumatique (10) avec une pression élevée au niveau d'un mécanisme de commutation (30), qui agit sur les débits volumiques de fluide destinés à exciter l'instrument de travail respectif (28), et où le mécanisme de commutation (30) présente deux distributeurs (32, 34) équipés de plusieurs raccordements utiles, **caractérisé en ce que** ledit un raccordement utile d'entrée (40) dudit un distributeur (32) est raccordé à l'antenne (42) et ledit autre raccordement utile (44) entrant dans ce distributeur (32) est raccordé à la canalisation de réservoir (T), **en ce que** les deux raccordements utiles d'entrée (48, 46) de l'autre distributeur (34) débouchent dans la tuyauterie de pompage (P) ou canalisation de réservoir (T), et **en ce que** le raccordement utile de sortie (50) de ce distributeur (34) est relié à chaque élément d'entraînement hydraulique susceptible d'être actionné appartenant à l'instrument de travail (28).

2. Appareil de commande selon la revendication 1, **caractérisé en ce que** la sortie transportant le fluide (36) dudit un distributeur (32) est raccordée à l'élément d'actionnement (38) de l'autre distributeur (34).

3. Appareil de commande selon la revendication 2, **caractérisé en ce que** chaque distributeur (32, 34) présente deux positions de commutation et trois raccordements utiles.

4. Appareil de commande selon l'une quelconque des revendications 1 à 3, **caractérisé en ce que** des tuyères sont montées dans les raccordements utiles (40 et 44), au moyens desquelles le comportement de commutation peut être réglé.

5. Appareil de commande selon l'une quelconque des revendications 1 à 4, **caractérisé en ce que** chaque élément d'entraînement est un cylindre de travail hydraulique susceptible d'être actionné (26), qui est raccordé, côté piston, au raccordement utile de sortie (50) de l'autre distributeur (34) et, côté tige, au raccordement du réservoir (T).

6. Appareil de commande selon l'une quelconque des revendications 1 à 5, **caractérisé en ce que** chaque élément d'entraînement constitue au moins un moteur hydraulique, qui peut être raccordé au raccordement utile (50) et à la canalisation du réservoir (T).

7. Appareil de commande selon l'une quelconque des revendications 1 à 6, **caractérisé en ce que** l'antenne (42) présente une conduite de raccordement acheminant la pression, qui débouche, son extrémité étant détournée dudit un distributeur (32), dans un circuit commande (16) de la suspension hydropneumatique (10), lequel circuit est relié à la canalisation de pompage (P) ainsi qu'au côté tige de cylindres de travail hydrauliques (14) de la suspension.

8. Appareil de commande selon la revendication 7, **caractérisé en ce qu'**au moins un accumulateur hydraulique (20) est raccordé au circuit commande (16) entre l'embranchement de la conduite de raccordement acheminant la pression et le côté tige du cylindre de travail (14) de la suspension (10).
